## Europäisches Patentamt

## European Patent Office

## Office européen des brevets

(11) Veröffentlichungsnummer: **0 285 790**
**A1**

## (12) EUROPÄISCHE PATENTANMELDUNG

(21) Anmeldenummer: **88102758.5**

(22) Anmeldetag: **24.02.88**

(51) Int. Cl.⁴: **B60D 1/14**

(30) Priorität: **08.04.87 DE 8705231 U**

(43) Veröffentlichungstag der Anmeldung:
**12.10.88 Patentblatt 88/41**

(84) Benannte Vertragsstaaten:
**AT CH DE FR LI**

(71) Anmelder: **Gassner, Johann, jr.**
**Haus Nr. 10**
**D-8011 Göggenhofen(DE)**

(72) Erfinder: **Gassner, Johann, jr.**
**Haus Nr. 10**
**D-8011 Göggenhofen(DE)**

(74) Vertreter: **Lamprecht, Helmut, Dipl.-Ing.**
**Corneliusstrasse 42**
**D-8000 München 5(DE)**

㊺ **Einachsiger Schlepperanhänger mit Schwenkkran.**

㊢ Ein einachsiger Schlepperanhänger (10) mit einem Schwenkkran (26), insbesondere für die Forstwirtschaft, ist mit seinem kupplungsseitigen Ende über ein Drehgelenk (36) mit vertikaler Achse auf einen horizontalen Querbalken (38) abgestützt, dessen Enden mit im wesentlichen vertikalem Spiel mit den Unterlenkern (14) des Schleppers (12) verbindbar sind. Außerdem ist der horizontale Querbalken (38) über einen hydraulisch beaufschlagbaren Druckstempel (54) mit einem Anschlußpunkt (56) am Schlepper (12) verbindbar.

Fig. 1

EP 0 285 790 A1

## Einachsiger Schlepperanhänger mit Schwenkkran.

Die Erfindung betrifft einen einachsigen Schlepperanhänger mit einem Schwenkkran, insbesondere für die Forstwirtschaft, der mit einer zur Verbindung mit einem Schlepper geeigneten Kupplung versehen ist.

Derartige Anhänger sind bekannt. Sie dienen beispielsweise in der Forstwirtschaft dazu, mit dem am Anhänger angebrachten Drehkran das Rücken, Laden und Transportieren von Schnittholz durchzuführen. Damit auch schwieriges Gelände befahren werden kann, verwendet man Einachsanhänger. Der Drehkran ist dabei in einer festen Zuordnung zur Ladefläche des Anhängers am Anhänger selbst angebracht, wodurch der Arbeitsbereich des Drehkrans in Bezug auf die Ladefläche des Anhängers und deren Umgebung von der Lage des Anhängers relativ zum Schlepper unbeeinflußt bleibt.

Die Verbindung bekannter Schlepperanhänger dieser Art mit dem Schlepper erfolgt über die schlepperseitige Anhängerkupplung. Damit man beim Arbeiten des Krans eine stabile Lage der Kransäule erreicht, muß der den Kran transportierende Anhänger über Hydraulikstempel auf dem Boden fest abgestützt werden. Derartige Konstruktionen sind relativ teuer und setzen zudem voraus, daß im Bereich der Hydraulikstempel ein fester Untergrund zur Verfügung steht, auf welchem sich diese Stempel abstützen können. In schwierigem Gelände kann aber nicht immer damit gerechnet werden, daß der Anhänger in eine solche Position gebracht werden kann, damit die Stempel einen festen Untergrund finden.

Der Erfindung liegt die Aufgabe zugrunde, einen einachsigen Schlepperanhänger mit Schwenkkran derart auszugestalten, daß er eine optimale Geländegängigkeit mit der Möglichkeit vereint, den Drehkran an jeder Stelle eines befahrbaren Geländes einzusetzen.

Die Lösung dieser Aufgabe besteht erfindungsgemäß darin, daß das kupplungsseitige Ende des Anhängers über ein Drehgelenk mit vertikaler Achse auf einen horizontalen Querbalken abgestützt ist, dessen Enden mit im wesentlichen vertikalem Spiel mit den Unterlenkern eines Schleppers und der über einen hydraulisch beaufschlagbaren Druckstempel mt einem Anschlußpunkt am Schlepper verbindbar ist.

Die vertikale Achse zwischen dem Querbalken und dem kupplungsseitigen Ende des Anhängers ermöglicht den erforderlichen Seitenausschlag des Anhängers gegenüber dem Schlepper, während das im wesentlichen vertikale Spiel des horizontalen Querbalkens gegenüber den Unterlenkern eine Verwindung des Anhängers gegenüber dem Schlepper in Bezug auf die etwa horizontale, in Fahrtrichtung des Schleppers verlaufende Achse ermöglicht. Damit wird ein hohes Maß an Geländegängigkeit gewährleistet. Zugleich wird durch die Verbindung des Anhängers mit den Unterlenkern des Schleppers die zulässige Belastung des Anhängers wesentlich erhöht, weil die zulässige Aufsattellast bei üblichen Anhängerkupplungen an Schleppern zwischen 650 und 850 kp liegt, während die Unterlenker des Schleppers eine Aufsattellast von mindestens etwa 2.500 kp aufnehmen können.

Solange das vertikale Spiel zwischen dem Querbalken und den Unterlenkern besteht, weist der Drehkran keine stabile Position auf. Hat der Anhänger seine Arbeitsposition erreicht, in welcher der Drehkran eingesetzt werden soll, wird der Druckstempel zwischen dem Querbalken und dem Schlepper mit Hydraulikdruck beaufschlagt, wodurch der Querbalken spielfrei an den Unterlenkern festgelegt wird und der Anhänger somit eine stabile Lage einnimmt, ohne daß es erforderlich ist, den Anhänger mit dem Drehkran durch auf den Boden abgesenkte Druckstempel abzustützen. Der Drehkran kann also auch dort eingesetzt werden, wo eine Stabilisierung durch Absenken derartiger Druckstempel auf den Boden wegen eines ungeeigneten Untergrundes nicht möglich ist.

Nach einer zweckmäßigen Ausgestaltung weist der Querbalken an beiden Enden jeweils ein gabelförmiges Kupplungsstück mit jeweils zwei parallelen Schenkeln auf, die in Längsrichtung des Querbalkens deckungsgleich zueinander angeordnete, etwa parallel zur Drehgelenksachse verlaufende Langlöcher aufweisen, die von einem lösbaren, zur Verbindung mit den Unterlenkern des Schleppers geeignete Gelenkbolzen durchquert werden.

Eine weitere zweckmäßige Ausgestaltung besteht darin, daß der Querbalken an beiden Enden mit absenkbaren Stützbeinen versehen ist, wodurch eine zusätzliche Abstützung dann ermöglicht wird, wenn das Gelände es zuläßt. Außerdem kann durch derartige Stützbeine das Kippen des Anhängers um die Anhängerachse verhindert werden, wenn dieser abgekuppelt vom Schlepper abgestellt wird.

Anhand der nun folgenden Beschreibung eines in der Zeichnung dargestellten Ausführungsbeispiels der Erfindung wird diese näher erläutert.

Es zeigt:

Fig. 1 eine schematische Seitenansicht eines erfindungsgemäßen Schlepperanhängers, angekuppelt an einen Schlepper,

Fig. 2 eine Draufsicht auf den Querbalken des Anhängers und

Fig. 3 eine Seitenansicht des Querbalkens.

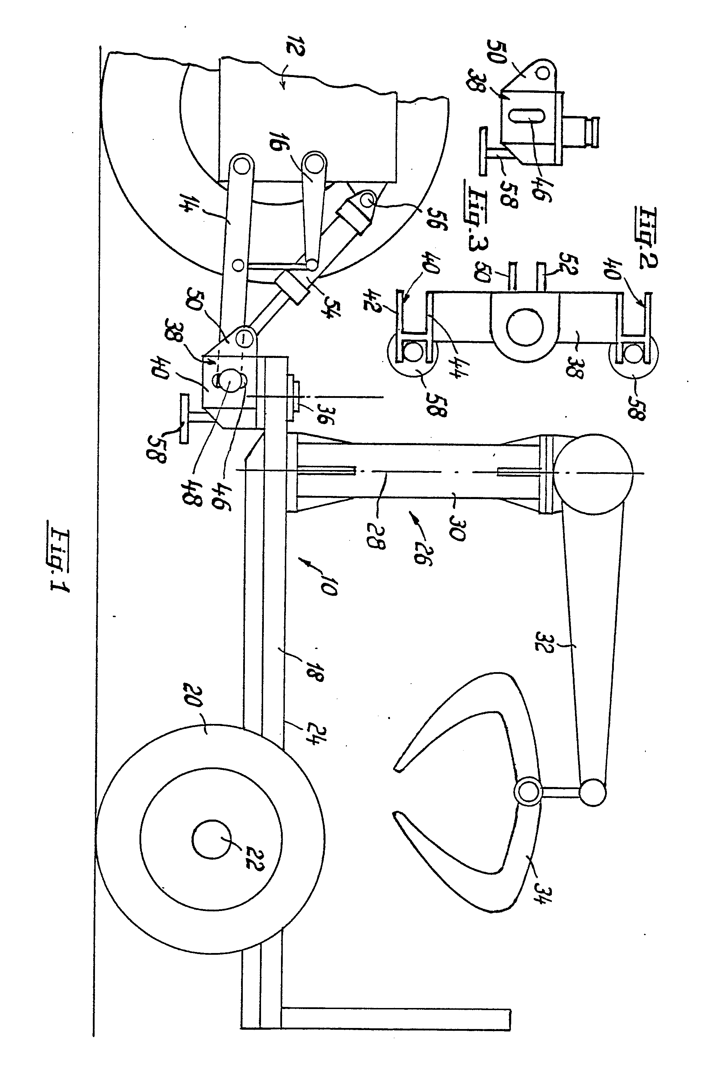

Ein insgesamt mit 10 bezeichneter Schlepperanhänger ist mit einem Schlepper 12 verbunden, der mit einer üblichen Dreipunktanlenkung versehen ist. Für die Verbindung zwischen dem Schlepper 12 und dem Anhänger 10 werden lediglich die Unterlenker 14 der Dreipunktanlenkung benötigt, welche durch die Schlepperhydraulik mittels einer Hubeinrichtung 16 anhebbar sind.

Der Schlepperanhänger 10 besteht aus einem Rahmen 18, welcher über eine ein Räderpaar 20 tragende Achse 22 auf den Boden abgestützt ist. Auf dem Rahmen ist eine Ladefläche 24 angebracht, an derem schlepperseitigen Ende ein insgesamt mit 26 bezeichneter Drehkran angeordnet ist. Dieser Drehkran besitzt eine vertikale, um eine Achse 28 gegenüber dem Rahmen 18 drehbare Säule 30, an derem oberen Ende um eine horizontale Achse auf und ab verschwenkbar ein Ausleger 32 ange bracht ist, an dessem freien Ende ein Greifer 34 angeordnet ist. Zur Betätigung des Drehkrans dient in an sich bekannter Weise die Hydraulik des Schleppers 12.

Das den Drehkran 26 tragende, - schlepperseitige Ende des Rahmens 18 ist über ein Drehzapfengelenk 36 mit vertikaler Achse auf einen Querbalken 38 abgestützt, der an seinen beiden Enden U-förmige Kupplungsstücke 40 aufweist, die sich in horizontaler, vom Rahmen 18 abgewandter Richtung öffnen und deren beide Schenkel 42 und 44 jeweils mit sich in vertikaler Richtung erstreckenden Langlöchern 46 versehen sind, durche welche lösbar und auf geeignete Weise gegen Herausfallen gesichert ein zur gelenkigen Verbindung mit den Unterlenkern 14 geeigneter Gelenkbolzen 48 einsteckbar ist.

Im mittleren Bereich des Querbalkens 38 sind auf seiner dem Schlepper zugewandten Seite zwei parallele Kupplungsaugen 50 und 52 angebracht, welche zur gelenkigen Verbindung mit einem Hydraulikzylinder 54 dienen, dessen anderes Ende an dem Oberlenkeranschlußpunkt 56 am Schlepper oder einem anderen geeigneten Anschlußpunkt des Schleppers befestigt ist. Der Hydraulikzylinder 54 ist mit dem Hydrauliksystem des Schleppers 12 derart verbunden, daß er zwischen seinen Anschlußpunkten eine Druckkräft ausüben kann.

Bei der Fahrt des aus Anhänger 10 und Schlepper 12 bestehenden Gespanns ist der Hydraulikzylinder 54 drucklos, so daß der Anhänger 10 sich gegenüber dem Schlepper 12 nicht nur um die vertikale Achse des Drehzapfengelenks 36 verschwenken kann, sondern auch eine Bewegung um eine etwa in Fahrtrichtung des Schleppers 12 verlaufende horizontale Achse ausführen kann. Dadurch ist eine optimale Geländegängigkeit gegeben. Sobald das Gespann den Einsatzort des Kranes 26 erreicht hat und der Schlepper 12 zum Stillstand gekommen ist, wird der Hydraulikzylinder 54 mit Druck beaufschlagt, wodurch der Querbalken 38 gegenüber den die Anschlußbohrungen der Unterlenker 14 und die Langlöcher 46 durchquerenden Gelenkbolzen 48 nach unten gedrückt, so daß die Gelenkbolzen 48 an den oberen Enden der Langlöcher 46 fest anliegen und eine Kippbewegung des Querbalkens 38 unter Ausnützung des durch die Langlöcher 46 gegebenen Spiels verhindert ist. Der Rahmen 18 stützt sich somit spielfrei auf dem Querbalken 38 ab, wodurch auch der Kran 26 eine stabile Lagerung aufweist und einsatzbereit ist.

Lediglich als zusätzliche Abstützung und insbesondere auch als Abstützung des vom Schlepper 12 abgekuppelten Anhängers 10 können am Querbalken 38, den Kupplungsstücken 40 benachbart, zwei seitliche, vertikal und auch n nicht näher dargestellter Weise hinsichtlich ihrer Stützbreite verstellbare Stützbeine 58 angeordnet sein.

Abgesehen von der insgesamt einfachen und damit kostengünstigen Konstruktion wird eine gegenüber bisher bekannten Anhängern dieser Art verbesserte Geländegängigkeit erreicht, verbunden mit der Möglichkeit, durch eine starre Abstützung über den Schlepper den Kran an jeder von dem Gespann aus Schlepper und Anhänger erreichbaren Geländestelle einzusetzen, auch wenn eine Abstützung über die Stützbeine nicht möglich ist. Dabei wird auch die zulässige Belastung des Anhängers sehr wesentlich verbessert. Ein weiterer Vorteil der Erfindung besteht darin, daß die vertika le Schwenkachse für den Anhänger gegenüber bekannten Konstruktionen weiter vom Schlepper entfernt liegt, wodurch sich bessere Nachlaufeigenschaften ergeben.

**Ansprüche**

1. Einachsiger Schlepperanhänger mit einem Schwenkkran, insbesondere für die Forstwirtschaft, der mit einer zu Verbindung mit einem Schlepper geeigneten Kupplung versehen ist, dadurch gekennzeichnet, daß das kupplungsseitige Ende des Anhängers (10) über ein Drehgelenk (36) mit vertikaler Achse auf einen horizontalen Querbalken (38) abgestützt ist, dessen Enden mit im wesentlichen vertikalem Spiel mit den Unterlenkern (14) eines Schleppers (12) und der über einen hydraulisch beaufschlagbaren Druckstempel (54) mit einem Anschlußpunkt (56) am Schlepper (12) verbindbar ist.

2. Schlepperanhänger nach Anspruch 1, dadurch gekennzeichnet, daß der Querbalken (38) an beiden Enden jeweils ein gabelförmiges Kupplungsstück (40) mit jeweils zwei parallelen Schenkeln (42, 44) aufweist, die in Längsrichtung des Querbalkens (38) deckungsgleich zueinander angeordnete, etwa parallel zur Drehgelenkachse verlaufende Langlöcher (46) aufweisen, die von einem lösbaren, zur Verbindung mit den Unterlenkern (14) des Schleppers (12) geeigneten Gelenkbolzen (48) durchquert werden.

3. Schlepperanhänger nach einem der Ansprüche 1 oder 2, *dadurch gekennzeichnet*, daß der Querbalken (38) mit in der Länge und Stützbreite einstellbaren Stützbeinen (58) versehen ist.

0 285 790

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 845 801 (KONETEHDAS MASKINFABRIK NORCAR KY KB) * Seite 5, Zeile 20 - Seite 7, Zeile 26; Figuren 1,2 * | 1 | B 60 D 1/14 |
| A | CH-A- 351 505 (J. STREBEL) * Seite 1, Zeile 66 - Seite 2, Zeile 23; Figuren 1,2 * | 1 | |
| A | GB-A-2 123 267 (P. DOHERTY BIGARA) * Insgesamt * | 1,2 | |
| A | DE-A-3 316 128 (GEBRÜDER HOLDER) * Seite 10, Zeile 3 - Seite 11, Zeile 18; Figur 1 * | 1 | |
| A | EP-A-0 081 190 (H. RUF) * Zusammenfassung; Figur 1 * | 1 | |
| A | DE-B-1 029 686 (MASSEY-HARRIS-FERGUSON) * Spalte 4, Zeilen 16-19; Figuren 2-4 * | 3 | |

**RECHERCHIERTE SACHGEBIETE (Int. Cl.4)**

B 60 D
A 01 B
A 01 G
B 62 D

Der vorliegende Recherchenbericht wurde für alle Patentansprüche erstellt

| Recherchenort | Abschlußdatum der Recherche | Prüfer |
|---|---|---|
| DEN HAAG | 15-07-1988 | LINTZ C.H. |